# EUROPEAN PATENT SPECIFICATION

(11) **EP 0 908 469 B1**
(45) Date of publication and mention of the grant of the patent: **02.05.2003**
(21) Application number: 98124310.8
(22) Date of filing: 16.10.1991
(51) Int. Cl.: C08F 4/654, C08F 10/00

(54) **Olefin polymerization catalyst precursor**
Olefinpolymerisationskatalysatorvorläufer
Précurseur de catalyseur de polymérisation d'oléfines

(30) Priority: 18.10.1990 US 599550; 18.10.1990 US 599538; 18.10.1990 US 599610; 22.10.1990 US 600781; 22.10.1990 US 600898
(43) Date of publication of application: 14.04.1999
(62) Divisional of application: 91309518.8
(73) Proprietor: UNION CARBIDE CHEMICALS & PLASTICS TECHNOLOGY CORPORATION, Danbury, Connecticut 06817-0001 (US)
(72) Inventor: Job, Robert Charles, Houston, Texas 77077 (US)
(74) Representative: Allard, Susan Joyce

(56) References cited:
- EP-A- 0 268 274
- US-A- 4 472 521

## Description

This invention relates to a magnesium-containing, titanium-containing precursor of a catalyst component which can be used to produce a high activity olefin polymerization catalyst.

The production of polymers of α-olefins, particularly, ethylene and propylene, has gained commercial acceptance. The products are inexpensive and exhibit a number of commercially useful properties. In the case of the polymerization of ethylene the process is uncomplicated in that the product type is not influenced by the manner in which the ethylene molecules add to the growing polymer chain and the polymeric product does not exist in stereoisomeric forms.

In the case of polymerization of propylene the presence of methyl groups provides the several types of product depending on the steric regularity with which units add to the growing polymeric chain. Most commercial polypropylene is crystalline and results from stereoregular addition of propylene units in a regular head-to-tail manner. Polypropylene in which the units add randomly is termed atactic. This amorphous form is less desirable and often must be removed as by extraction.

Also significant is the activity of the polymerization catalyst. The early trivalent titanium, chromium or vanadium catalysts were of low activity and the product contained a significant proportion of catalyst residues. Removal of such residues was required to obtain commercially satisfactory properties.

The more recent titanium-based polymerization catalysts are stereoregulating and have sufficient activity to avoid extraction and deashing steps. In terms employed conventionally, the high activity catalysts are formed from a solid procatalyst which typically contains magnesium, titanium and halide moieties, a cocatalyst which is usually an organoaluminum compound and a selectivity control agent (SCA). Each of these components influences the catalyst and polymer produced therefrom but the procatalyst seems to have the greatest influence.

US-A-4,330,649 describes a procatalyst obtained by heating a magnesium compound with a higher alcohol and an ester to produce a solution. This solution is added to TiCl₄ and an electron donor (ED) to form the procatalyst. US-A-4,472,521 describes reacting a magnesium alkoxide with a titanium alkoxide in an aromatic hydrocarbon. TiCl₄ and an ED are added to form a solid which is post-treated with transition metal halide. US-A-4,540,679 describes the production of a catalyst component by contacting a suspension of Mg(OC₂H₅)₂ in ethanol with CO₂. The addition of organoaluminum in hydrocarbon produces granular particles employed as support for titanium compound upon contact with TiCl₄. US-A-4728705 describes solubilizing Mg(OC₂H₅)₂ in ethanol with CO₂ and spray drying the resulting solution or using the solution to impregnate carrier particles. Either type of particle is useful in the production of procatalyst of desirable morphology.

A different catalyst is described in US-A-4,710,428, wherein a magnesium compound of the general formula

Mg₄(OR)₆(ROH)₁₀A (I)

is formed wherein R is lower alkyl and A is at least one anion having a total oxidation state of -2. This complex is reacted with tetravalent titanium halide, a halohydrocarbon and an ED to form a procatalyst. The use of the above complexes has advantages in that the complexes are crystals of desirable morphology in contrast to Mg(OC₂H₅)₂ which is not. The crystals can be converted to olefin polymerization catalyst precursors and to catalysts by largely conventional technology. The catalysts are active and produce polymer products of good properties. It would be of advantage to produce improved catalyst precursors and olefin polymerization catalysts whose use results in improved polymer product.

The invention provides complex magnesium-containing, titanium-containing compounds useful as precursors of high activity olefin polymerisation catalysts and a process of polymerizing lower α-olefins employing such catalysts. The polyolefins obtained by use of the catalysts have good properties and are obtained in good yield.

Accordingly, the invention provides an olefin polymerization procatalyst precursor which contains moieties of magnesium and titanium and which is obtainable by contacting a magnesium alkoxide, a titanium alkoxide and a phenolic compound at an elevated temperature in an inert diluent, wherein each alkoxide moiety independently has up to 4 carbon atoms inclusive and the phenolic compound is o-cresol, 3-methoxyphenol or 4-dimethylaminophenol.

In all of these phenolic compounds the phenolic hydroxyl group is free of steric hindrance.

The procatalyst precursor can then be contacted with a halide of tetravalent titanium halide, an optional halohydrocarbon and an ED to form a solid procatalyst. The procatalyst in turn can then be contacted with an organoaluminum cocatalyst and an SCA to form a high activity olefin polymerization catalyst. The conversion of procatalyst precursor to procatalyst and of procatalyst to catalyst is largely conventional, but the procatalyst precursor can suitably be formed by a number of procedures and takes various forms and compositions depending upon the method of its preparation.

The complex olefin polymerization procatalyst precursor of the present invention, is produced by contacting a magnesium alkoxide, a titanium alkoxide and a phenolic compound in an inert diluent. The alkoxide moieties of a reactant or of the reactants are the same or different and are preferably ethoxide. The phenolic compound, characterized as producing an anion moiety X', is an activated group-substituted phenol whose phenolic hydroxyl group is free of steric hindrance. Of the three phenolic compounds that can be used in the present invention, o-cresol is preferred.

The complex alkoxide procatalyst precursor of this embodiment can be illustrated by the formula

Mg₃Tiₐ(OR)_{b}X'_{c} (IV)

wherein each R independently is alkyl of up to 4 carbon atoms inclusive and is preferably ethyl, X' is a monovalent anion of the phenolic compound, a is 0.5 to 3 inclusive, preferably 0.5≤ a ≤ 2, 0≤ c ≤ 2, and b is (6+4a-c). A preferred complex alkoxide has the formula

Mg₃Ti(OR)₈X'₂ (IVa)

wherein R and X' are as previously defined. The inert diluent suitable is a hydrocarbon such as isopentane, isooctane, toluene, or even a kerosene fraction or is a halohydrocarbon such as methylene chloride or chlorobenzene.

The production of the complex alkoxide of formula IV takes place at elevated temperature and suitably at a pressure sufficient to maintain the reaction mixture in a non-gaseous state. Suitable temperatures are from 50°C to 110°C, preferably from 70°C to 100°C. The contacting is in a suitable reactor and can be conventionally facilitated as by shaking, stirring or refluxing. Sufficient magnesium alkoxide is usually employed to provide from 1% to 6% by weight magnesium based on total solution. The complex alkoxide olefin procatalyst precursor which results is a solution of variable viscosity depending upon the particular diluent employed and the ratio of reactants. The precursor can be converted to a procatalyst by procedures described below.

The olefin polymerization procatalyst precursor can be converted to a procatalyst by contact with a halide of tetravalent titanium, optionally with halohydrocarbon, and an ED. The halide of tetravalent titanium can be an aryloxy- or an alkoxy- di- or trihalide such as diethoxytitanium dichloride, dihexyloxytitanium dibromide, isopropyloxytitanium trichloride, or phenoxytitanium tribromide, or can be a titanium tetrahalide such as TiCl₄ or TiBr₄. A titanium tetrahalide is preferred, particularly TiCl₄.

The halohydrocarbon optionally employed in the production of procatalyst suitably has up to 12 carbon atoms, preferably up to 9 carbon atoms, and contains at least one halogen atom or in the case of aliphatic halohydrocarbons contains at least two halogens. Exemplary aliphatic halohydrocarbons include CH₂Cl₂, CH₂Br₂, CHCl₃, CCl₄, 1,2-dibromoethane, 1,1,3-trichloropropane, 1,1,2-trichloroethane, trichlorocyclohexane, dichlorofluoromethane and trichloroisooctane. Aromatic halohydrocarbons suitably employed include chlorobenzene, bromobenzene, dichlorobenzene and chlorotoluene. Of the aliphatic halohydrocarbons CCl₄ and 1,1,2-trichloroethane are preferred, but particularly preferred is chlorobenzene.

The electron donor employed in the procatalyst is an ED conventionally used in titanium-based olefin polymerization procatalyst. The ED can be free from active hydrogens. Examples of suitable electron donors include ethers, esters, ketones, amines, imines, amides, nitriles, phosphines, stibines, arsines and alcoholates. A preferred ED is an ester, particularly an alkyl ester of an aromatic monocarboxylic or dicarboxylic acid. Preferred ED's are ethyl benzoate, ethyl p-ethylbenzoate and diisobutyl phthalate. The ED can be a mixture of compounds but preferably is a single compound. Ethyl benzoate and diisobutyl phthalate are preferred.

The manner in which the procatalyst precursor, halide of tetravalent titanium, the halohydrocarbon when employed and the ED are contacted is material but not critical. Best results are obtained when the ED is added to the procatalyst precursor and the resulting mixture is added to at least a portion of the halide of tetravalent titanium. Alternatively, the halide of tetravalent titanium is added to a mixture of the procatalyst precursor and the ED. Other modifications are suitable but less preferred. The resulting solid is typically washed with a 50/50 mixture by volume of additional halide of tetravalent titanium and halohydrocarbon at least once and often twice or more times. This washing process, often termed a halogenation, is frequently aided by the additional presence of an acid halide, particularly an aromatic acid halide such as benzoyl chloride or phthaloyl chloride. Subsequent to contacting with a halide of tetravalent titanium and halohydrocarbon, the resulting solid procatalyst can be washed with a light hydrocarbon to remove unreacted titanium compounds.

In the preferred modification, the initial contacting of ED and procatalyst precursor is conducted at a temperature from ambient temperature to 150°C. Preferably, the materials are mixed at ambient temperature. Sufficient halide of tetravalent titanium and any acid halide are used to convert a substantial portion of the anion moieties of the procatalyst precursor to halide moieties. Sufficient ED is used so that-the molar ratio of ED to Mg present in the procatalyst precursor is from 0.01:1 to 10:1, preferably from 0.06:1 to 0.4:1. The final washing produces procatalyst which is stable upon drying in the absence of O₂ and active hydrogen compounds or useful without drying in the formation of an olefin polymerization catalyst by reaction with a cocatalyst and SCA.

The cocatalyst is an organoaluminum compound of the type normally employed with titanium-based procatalysts in the production of high-activity olefin polymerization catalysts. Suitable organoaluminum compounds are alkylaluminum compounds such as trialkylaluminum compounds, alkylaluminum halide compounds and alkylaluminum alkoxide compounds wherein each alkyl independently has 2 to 6 carbon atoms. The preferred alkylaluminum compounds are free of halide moieties and particularly preferred are trialkylaluminum compounds such as triethylaluminum, triisobutylaluminum and diethylhexylaluminum. Triethylaluminum is especially preferred. The organoaluminum compound is suitably employed in sufficient quantity to provide from 1 mole to 150 moles of aluminum per mole of titanium in the procatalyst, preferably from 10 moles to 100 moles of aluminum per mole of titanium.

The SCA employed in catalyst production can be any conventionally utilized in olefin polymerization catalysts based on titanium. A suitable SCA is an ED such as those above for use in procatalyst production but may also be an organosilane of the formula R'_{q}Si(OR)_{4-q} wherein R' is alkyl or aryl of up to 10 carbon atoms, R has the previously stated meaning and q is 1 or 2. A preferred SCA is an ester of an aromatic acid, e.g. ethyl p-ethylbenzoate, diisobutyl phthalate, or ethyl p-methylbenzoate, or an alkylalkoxysilane such as diisobutyldimethoxysilane, isopropyltrimethoxysilane or cyclohexylmethyldimethoxysilane. The SCA is suitably provided to give from 0.01 mole to 100 moles of SCA per mole of titanium in the procatalyst, preferably from 0.5 mole to 20 moles per mole of. titanium.

The components of the olefin polymerization catalyst are contacted by largely conventional methods. In one modification, the components are contacted outside the polymerization zone as by mixing the components and introducing the preformed catalyst into the polymerization reactor. In an alternative modification, the catalyst components are introduced separately into the polymerization reactor and the catalyst is formed in situ. The olefin polymerization catalyst is useful in the polymerization of lower α-olefins under polymerization conditions and particularly in the polymerization of straight-chain α-olefins of up to 4 carbon atoms, i.e ethylene, propylene and 1-butene. The procedure of the polymerization process of the invention, by virtue of its use of a catalyst produced from the complex procatalyst precursors of the invention, provides polyolefin product having good properties in quantities which reflect the high activity of the catalyst. The polymerization product can be a homopolymer, e.g. polyethylene or polypropylene, when a single α-olefin monomer is supplied to the reactor. Alternatively, the product can be a copolymer (or terpolymer) such as EPR or polypropylene impact copolymer when two or more monomers are provided to the polymerization reactor.

The polymerization can be conducted as a gas-phase process employing one or more fluidized catalyst beds or can be conducted as a slurry-phase process employing as a diluent an inert material such as propane or a liquified monomer of the polymerization such as propylene. The molecular weight of the polymer product and thus to some extent the properties of the product are influenced by the provisions to the polymerization system of molecular hydrogen as is known in the art. The process can be conducted batch-wise or in a continuous or semi-continuous manner.

The catalyst productivity is often inversely related to selectivity so that highly active catalysts often afford polymer product of low stereoregularity. The catalysts of the invention exhibit good productivity while retaining a desirably high stereospecificity so that polymer is obtained in good quantities with sufficiently good properties that extraction and deashing steps.are not required.

The invention will be further illustrated by reference to the following Example. In the Example the productivity of the catalyst (also termed "yield") is determined in kg of polymer product per gram of catalyst in a standard batch process of 1 hour. The stereospecificity of the catalyst and specifically the selectivity to isotactic product is determined by measuring the xylene solubles (XS) in accordance with the regulations of the U.S. Food and Drug Administration. The test for XS comprises dissolving a polymer sample in xylene under reflux in a flask. The flask is then placed in a water bath at 25°C for 1 hour without stirring. The precipitate formed is then removed by filtration and the solubles content is determined by evaporating an aliquot of the filtrate followed by drying and weighing the residue. The xylene solubles consist primarily of amorphous (atactic) polymer and a small amount of low molecular weight polymer. The bulk density of polymer product (B.D.) is determined in gm/cm³.

### EXAMPLE I

A. Olefin polymerization procatalyst precursors were prepared by contacting Mg(OC₂H₅)₂, Ti(OC₂Hₛ)₄ and o-cresol in varying proportions in various solvents and the resulting mixtures were heated at temperatures from 50°C to 110°C. By way of illustration, in a flask equipped with a reflux condenser, 116g (1.00 mole) of Mg(OC₂H₅)₂, 81.2g (0.34 mole) of Ti(OC₂H₅)₄ and 73g (0.67 mole) of o-cresol were slurried in 276g of isooctane. After stirring for over 1 hour at 85°C, a relatively non-viscous solution resulted which contained 4.5% Mg by weight. The molar ratio of cresol/Ti/Mg was 2/3/1. Solutions of similar concentrations were prepared using various molar ratios of reactants. A number of these solutions are described in Table I where the proportions of reactants are indicated and viscosity of the solution is estimated between 1 (similar to water) and 5 (similar to jelly). The solvents employed are listed where CB is chlorobenzene, iC₈ is isooctane, CH is cyclohexane and DCM is dichloromethane.

**TABLE I**

| o-cresol | Mg(OC₂H₅)₂ | Ti(OC₂H₅)₄ | Solvent | Viscosity |
|---|---|---|---|---|
| 0.5 | 3 | 1.75 | CB,CH | 1 |
| 0.5 | 3 | 1 | CB,CH | 5 |
| 0.75 | 3 | 1 | CB | 4 |
| 1 | 3 | 1 | CB | 2 |
| 1 | 3 | 1.5 | CB,iC₈ | 1 |
| 2 | 3 | 0.5 | iC₈ | 2 |
| 2 | 3 | 1 | CB | 2 |
| 2 | 4 | 1 | iC₈,DCM | 3 |
| 2 | 4.5 | 1 | CB | 5 |

B. The solutions of Example IA were used in the production of procatalysts by the general procedure of:
employing a digest at 110°C for 60 minutes in 150 ml of TiCl₄, utilizing sufficient solution to provide 30-50 mmol magnesium. Sufficient diisobutyl phthalate was also present to provide a concentration of about 40 mmol/litre. The resulting solid product was washed at 110°C with 150 ml of a 50/50 by volume mixture of chlorobenzene and TiCl₄ containing 6 mmol/litre of phthaloyl chloride. This was followed by a 30 minute wash at 110°C with the 50/50 mixture. The resulting solid procatalyst was washed twice with isooctane at room temperature and dried under N₂ at 50°C.
The contacting of the precursor solutions and the first wash solution was accomplished by one of three methods. In method 1, the diisobutyl phthalate was added to the precursor solution and the mixture was added dropwise to 150 ml of stirred TiCl₄ mixture at room temperature. After 20 minutes, the mixture was heated to 110°C for the remainder of the digest period. Method 2 is similar, except the precursor solution and ED were held overnight at room temperature before being added to the TiCl₄ mixture. In Method 3' the TiCl₄ solution was added dropwise to the mixture of diisobutyl phthalate and the precursor solution.
C. The procatalysts of Example I.B were converted to catalysts by the general procedure of using triethylaluminum as cocatalyst and diisobutyl phthalate as SCA. Using these catalysts, propylene was polymerized in a slurry-phase process in liquid propylene.

Evaluations of these catalysts produced by the procedure above are shown in Table II. The "ratio" column indicates the molar proportions of reactants as well as the solvent used.

**TABLE II**

| Run | Ratio | Metho d | % Ti | Yield | XS | BD |
|---|---|---|---|---|---|---|
| -- | Mg(OC₂H₅)₂ | -- | 2.28 | 26.6 | 2.7 | 0.33 |
| 1 | 1/3/1.5,CB | 3' | 1.89 | 7.4 | 4.5 | 0.407 |
| 2 | 1/3/1.5,CB | 1 | 3.43 | 38.3 | 5.0 | 0.335 |
| 3 | 1/3/1.5,iC₈ | 1 | 3.13 | 26.5 | 4.1 | 0.347 |
| 4 | 2/3/1.CB | 1 | 2.66 | 22.5 | 4.4 | 0.358 |
| 5 | 2/4.5/1,CB | 2 | 3.32 | 20.3 | 3.9 | 0.338 |
| 6 | 0.5/3/1,CB | 2 | 2.24 | 30.8 | 2.1 | 0.434 |
| 7 | 1/3/1,CB | 2 | 2.69 | 30.4 | 3.4 | 0.405 |
| 8 | 0.5/3/1.5,CB | 1 | 3.39 | 41.2 | 4.4 | 0.368 |

## Claims

1. An olefin polymerization procatalyst precursor which contains moieties of magnesium and titanium and which is obtainable by contacting a magnesium alkoxide, a titanium alkoxide and a phenolic compound at an elevated temperature in an inert diluent,
wherein each alkoxide moiety independently has up to 4 carbon atoms inclusive and the phenolic compound is o-cresol, 3-methoxyphenol or 4-dimethylaminophenol.

2. A precursor according to claim 1, which is of the formula
Mg₃Tiₐ(OR)_{b}X'_{c}
wherein each R independently is alkyl of up to 4 carbon atoms and X' is a monovalent anion of the phenolic compound, a is 0.5 to 3 inclusive, O ≤ c ≤ 2 and b=6+4a-c

3. A precursor according to claim 1 or 2 which is of the formula
Mg₃Ti(OR)₈X'₂
wherein R is ethyl and X' is the anion of o-cresol.

4. A precursor according to any one of the preceding claims wherein the contacting of a magnesium alkoxide, a titanium alkoxide and the phenolic compound at an elevated temperature in an inert diluent takes place at a pressure sufficient to maintain the reaction mixture in a non-gaseous state.

5. A precursor according to any one of the preceding claims wherein the elevated temperature is in the range of from 50 to 110°C.

6. A precursor according to any one of the preceding claims wherein the magnesium alkoxide is used in an amount sufficient to provide from 1 to 6% by weight of magnesium based on the total solution weight.

7. A solid olefin polymerization procatalyst obtainable by contacting a procatalyst precursor as claimed in any one of the preceding claims with a halide of tetravalent titanium, an optional halohydrocarbon and an electron donor.

8. A procatalyst according to claim 7 wherein the halide of tetravalent titanium is titanium tetrachloride and the electron donor is an alkyl ester of an aromatic monocarboxylic or dicarboxylic acid.

9. A high activity olefin polymerization catalyst obtainable by contacting a procatalyst as claimed in claim 7 or claim 8 with an organoaluminum compound cocatalyst and a selectivity control agent.

10. A catalyst according to claim 9 wherein the cocatalyst is trialkylaluminum and the selectivity control agent is an alkyl ester of an aromatic monocarboxylic or dicarboxylic acid or an organosilane of the formula
R'_{q}Si(OR)_{4-q}
wherein R' is alkyl or aryl of up to 10 carbon atoms, R is alkyl of up to 4 carbon atoms and.q is 1 or 2.

11. A process for polymerizing a lower α-olefin having up to 4 carbon atoms which comprises contacting at least one lower α-olefin having up to 4 carbon atoms under polymerization conditions with a catalyst as claimed in claim 9 or 10.

12. A process according to claim 11 wherein the lower α-olefin is propylene.

## Patentansprüche

1. Prokatalysatorvorläufer für Olefinpolymerisation; der Einheiten von Magnesium und Titan enthält und der erhältlich ist durch Inkontaktbringen eines Magnesiumalkoxids, eines Titanalkoxids und einer phenolischen Verbindung bei einer erhöhten Temperatur in einem inerten Verdünnungsmittel, worin jede Alkoxideinheit unabhängig bis zu einschließlich 4 Kohlenstoffatome hat und die phenolische Verbindung o-Kresol, 3-Methoxyphenol oder 4-Dimethylaminophenol ist.

2. Vorläufer nach Anspruch 1, welcher die Formel hat:
Mg₃Tiₐ(OR)_{b}X'_{c}
worin jedes R unabhängig Alkyl mit bis zu 4 Kohlenstoffatomen ist und X' ein einwertiges Anion der phenolischen Verbindung ist, a = 0,5 bis einschließlich 3 ist, 0 ≤ c ≤ 2 ist und b = 6 + 4a - c ist.

3. Vorläufer nach Anspruch 1 oder 2, welcher die Formel hat:
Mg₃Ti(OR)₈X'₂
worin R Ethyl ist und X' das Anion von o-Kresol ist.

4. Vorläufer nach einem der vorhergehenden Ansprüche, bei welchem das Inkontaktbringen eines Magnesiumalkoxids, eines Titanalkoxids und der phenolischen Verbindung bei einer erhöhten Temperatur in einem inerten Verdünnungsmittel bei einem Druck stattfindet, der zum Halten der Reaktionsgemisches in einem nicht-gasförmigen Zustand ausreicht.

5. Vorläufer nach einem der vorhergehenden Ansprüche, bei welchem die erhöhte Temperatur in dem Bereich von 50 bis 110°C liegt.

6. Vorläufer nach einem der vorhergehenden Ansprüche, bei welchem das Magnesiumalkoxid in einer ausreichenden Menge verwendet wird, um von 1 bis 6 Gew.-% Magnesium, bezogen auf das Gesamtlösungsgewicht, bereitzustellen.

7. Fester Prokatalysator für Olefinpolymerisation, der durch Inkontaktbringen eines Prokatalysatorvorläufers, wie in einem beliebigen der vorhergehenden Ansprüche beansprucht, mit einem Halogenid von vierwertigem Titan, einem wahlweisen Kohlenwasserstoff und einem Elektronendonor erhältlich ist.

8. Prokatalysator nach Anspruch 7, bei welchem das Halogenid des vierwertigen Titans Titantetrachlorid ist und der Elektronendonor ein Alkylester einer aromatischen Monocarbon- oder dicarbonsäure ist.

9. Olefinpolymerisationskatalysator mit hoher Aktivität, der durch Inkontaktbringen eines Prokatalysators, wie in Anspruch 7 oder Anspruch 8 beansprucht, mit einem Organoaluminiumverbindungs-Cokatalysator und einem die Selektivität steuernden Mittel erhältlich ist.

10. Katalysator nach Anspruch 9, bei welchem der Cokatalysator Trialkylaluminium ist und das die Selektivität steuernde Mittel ein Alkylester einer aromatischen Monocarbonoder Dicarbonsäure oder ein Organosilan der Formel:
R'_{q}(OR)_{4-q}
ist, worin R' = Alkyl oder Aryl mit bis zu 10 Kohlenstoffatomen ist, R = Alkyl mit bis zu 4 Kohlenstoffatomen ist und q = 1 oder 2 ist.

11. Verfahren zum Polymerisieren eines niederen α-Olefins mit bis zu 4 Kohlenstoffatomen, welches das Inkontaktbringen wenigstens eines niederen α-Olefins mit bis zu 4 Kohlenstoffatomen unter Polymerisationsbedingungen mit einem Katalysator, wie in Anspruch 9 oder 10 beansprucht, umfaßt.

12. Verfahren nach Anspruch 11, bei welchem das niedere α-Olefin Propylen ist.

## Revendications

1. Précurseur de procatalyseur de polymérisation d'oléfines qui contient des fragments de magnésium et de titane et qui peut être obtenu en mettant en contact un alcoxyde de magnésium, un alcoxyde de titane et un composé phénolique à une température élevée dans un diluant inerte, dans lequel chaque radical alcoxyde comprend indépendamment jusqu'à 4 atomes de carbone et le composant phénolique est l'o-crésol, 3-méthoxyphénol ou 4-diméthylaminophénol.

2. Précurseur selon la revendication 1, qui a la formule
Mg₃Tiₐ(OR)_{b}X'_{c}
dans laquelle chaque R indépendamment est un alkyle ayant jusqu'à 4 atomes de carbone et X' est un anion monovalent du composé phénolique, a est de 0,5 à 3 inclus, 0 ≤ c s 2 et b=6+4a-c.

3. Précurseur selon la revendication 1 ou 2, qui a la formule
Mg₃Ti(OR)₈X'₂
où R est l'éthyle et X' est l'anion de l'o-crésol.

4. Précurseur selon l'une quelconque des revendications précédentes, dans lequel la mise en contact d'un alcoxyde de magnésium, d'un alcoxyde de titane et du composé phénolique à une température élevée dans un diluant inerte a lieu à une pression suffisante pour maintenir le mélange réactionnel dans un état non gazeux.

5. Précurseur selon l'une quelconque des revendications précédentes, dans lequel la température élevée est dans la gamme de 50 à 110°C.

6. Précurseur selon l'une quelconque des revendications précédentes, dans lequel l'alcoxyde de magnésium est. utilisé en une quantité suffisante pour fournir 1 à 6% en poids de magnésium par rapport au poids total de la solution.

7. Procatalyseur solide de polymérisation d'oléfines pouvant être obtenu en mettant en contact un précurseur de procatalyseur selon l'une quelconque des revendications précédentes avec un halogénure de titane tétravalent, un halogénohydrocarbure optionnel et un donneur d'électrons.

8. Protocatalyseur selon la revendication 7, dans lequel l'halogénur de titane tétravalent est le tétrachlorure de titane et le donneur d'électrons est un alkylester d'un acide aromatique monocarboxylique ou dicarboxylique.

9. Catalyseur de polymérisation d'oléfines à haute activité pouvant être obtenu en mettant en contact un protocatalyseur selon la revendication 7 ou la revendication 8 avec un cocatalyseur de composé organo-aluminium et un agent de contrôle de la sélectivité.

10. Catalyseur selon la revendication 9, dans lequel le cocatalyseur est du trialkylaluminium et l'agent de contrôle de la sélectivité est un alkylester d'un acide aromatique monocarboxylique ou dicarboxylique ou un organosilane de formule
R'_{q}Si(OR)_{4-q}
où R' est un alkyle ou un aryle ayant jusqu'à 10 atomes de carbone, R est un alkyle ayant jusqu'à 4 atomes de carbone et q est 1 ou 2.

11. Procédé pour polymériser une α-oléfine inférieure ayant jusqu'à 4 atomes de carbone, qui comprend la mise en contact d'au moins une α-oléfine inférieure ayant jusqu'à 4 atomes de carbone, dans des conditions de polymérisation, avec un catalyseur selon la revendication 9 ou 10.

12. Procédé selon la revendication 11, dans lequel l'α-oléfine est du propylène.
